# EUROPEAN PATENT APPLICATION

(11) **EP 1 933 532 A2**
(43) Date of publication of application: **18.06.2008**
(21) Application number: 08103075.1
(22) Date of filing: 07.09.2004
(51) Int. Cl.: H04L 29/06

(54) **System and method for proxy-based redirection of resource requests**

(30) Priority: 11.09.2003 US 659934
(62) Divisional of application: 04783182.1
(71) Applicant: Nokia Corporation, 02150 Espoo (FI)
(72) Inventor: Wu, Tao, Woburn, MA 01801 (US); Ahuja, Sadhna, Waltham, MA 02452 (US); Dixit, Sudhir, Weston, MA 02493-1151 (US)
(74) Representative: Read, Matthew Charles

(57) **Abstract**

A system and method are provided for requesting a resource over at least one network. The system includes a terminal, a host and a network proxy. The terminal can send a first request for the resource over a first network and a second network. In turn, the host can receive the first request and send a first response, where the first request identifies the resource at a first location on the host. The network proxy, which can communicate with the host over the second network independent of the first network, can receive the first response from the host, and reformulate the first request into a second request that identifies the resource at a second location. The network proxy can send the second request to a host of the resource at the second location such that the host of the resource at the second location can respond to the second request.

## Description

### FIELD OF THE INVENTION

The present invention generally relates to systems and methods for decreasing latency in network communications and, more particularly, relates to systems and methods for decreasing latency in wireless network communications by providing proxy-based redirection of resource requests.

### BACKGROUND OF THE INVENTION

Devices communicating over networks such as the Internet can utilize any of a number of different transport protocols including, for example, the Hypertext Transfer Protocol (HTTP), version 1.1 of which is described in the Internet Engineering Task Force (IETF) request for comment document RFC 2616, entitled: *Hypertext Transfer Protocol - HTTP*/*1*.*1*, the contents of which are hereby incorporated by reference in its entirety. In accordance with HTTP, a client may request a resource at a first location on a first host by sending a request message to the host, where the request message identifies the first location on the first host. In response, the first host can send the requested resource to the client. In various instances, however, the requested resource may have been temporarily or permanently moved from the first location to a second location, which may be on the first host or another, second host. In such instances, upon receiving the resource request, the first host typically sends a response message to the client that instructs the client to resend its request to the identified second location. After receiving the response message, the client can resend the request message to the respective host identifying the second location. The respective host can thereafter respond to the request message by sending the requested resource to the client.

As will be appreciated, in instances in which a requested resource has been moved from one location to another, requiring the client to resend its request undesirably increases latency between request and reception of the resource. And whereas such latency is generally not considered problematic in wireline network communication, increased latency can significantly affect network communication in a wireless environment. In this regard, in addition to latency in redirecting resource requests from one location to another, wireless network communication also suffers from increased latency due to a narrow radio bandwidth, which is approximately 30 kilo-bits-per-second in General Packet Radio Services (GPRS) communication. Further, wireless network communication also suffers from increased latency due to a layer of the radio link that accounts for high bit error rates. In general, for example, wireless network communication in accordance with GPRS can have a latency of approximately one second, which can be up to 30-40 times longer than similar wireline network communication.

### SUMMARY OF THE INVENTION

In light of the foregoing background, embodiments of the present invention provide an improved system, method and computer program product for requesting a resource over at least one network. More particularly, the system and method of embodiments of the present invention are capable of requesting a resource in a manner that decreases latency between requesting the resource and receiving a response that may include the resource. In this regard, to decrease latency between a client requesting and receiving a resource that has moved from one location to another location, embodiments of the present invention allow a terminal to request a resource from one location at least partially over a wireless link. Advantageously, the request can be resent to another location independent of the wireless link, and without an indication of the other location that is now providing the resource being received by the terminal over the wireless link. As compared to conventional techniques for requesting and receiving resources, then, embodiments of the present invention are capable of completing a request with fewer wireless transmissions, particularly when the resource has moved from one location to another.

According to one aspect of the present invention, a system is provided for requesting a resource over at least one network. The system includes a terminal, a host and a network proxy. The terminal is capable of sending a first request, such as a first hypertext transfer protocol (HTTP) request, for the resource over a first network such as a wireless or other high latency network, and over a second network such as a wireline or other low latency network. In turn, the host is capable of receiving the first request, which identifies the resource at a first location on the host, and thereafter sending a first response, such as a first HTTP response. The first response can identify the resource at a second location. For example, the first HTTP response can include a 3xx "Redirection" status code.

The network proxy, which is capable of communicating with the host over the second network independent of the first network, can receive the first response from the host, and reformulate the first request into a second request that identifies the resource at a second location. The network proxy can then send the second request to a host of the resource at the second location such that the host of the resource at the second location can respond to the second request with a second response. More particularly, the network proxy can examine the first response to determine if the first response identifies the resource at the second location, such as by determining if a first HTTP response includes a 3xx "Redirection" status code. And if the first response does not identify the resource at the second location, the network proxy can send the first response to the terminal. If the first response does identify the resource at the second location, however, the network proxy can reformulate the request and send the second request.

The terminal can include a client application, and in such instances, the system can further include a terminal proxy. The terminal proxy, which can communicate with the client application independent of the first network, can receive the first response and the second response from the network proxy. The terminal proxy can send the first response to the client application such that the client application can reformulate the first request into a third request that identifies the resource at a second location. The client application can then send the third request to the terminal proxy such that the terminal proxy can send the second response to the client application. The network proxy can be capable of compressing the first response and/or the second response before the terminal proxy receives the first response and second response. In such instances, terminal proxy can be capable of uncompressing the compressed first response and/or second response before sending the respective response to the client application.

Embodiments of the present invention provide an improved system and method for requesting a resource over at least one network. To decrease latency between a client requesting and receiving a resource that has moved from one location to another location, embodiments of the present invention provide a network proxy, and may additionally provide a terminal proxy. Then, in instances in which a client may otherwise be required to resend a resource request identifying a subsequent location of a requested resource, the network proxy is capable of resending the resource request on behalf of the client.

The network proxy can be capable of low latency (e.g., wireline) network communication with a host identified in the resource request, and capable of high latency (e.g., wireless) network communication with the terminal. By resending resource requests from the network proxy, then, the number of high latency transmissions required for the terminal to retrieve a resource that has moved from one location to another can be reduced, as compared to conventional techniques for retrieving resources under the same circumstances. Advantageously, the network proxy is capable of operating in a manner transparent to hosts of requested resources. And by including a terminal proxy, the network proxy can further be capable of operating in a manner transparent to clients. As such, the system and method of embodiments of the present invention solve the problems identified by prior techniques and provide additional advantages.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of a communications system according to one embodiment of the present invention;
FIG. 2 is a schematic diagram of a terminal comprising a mobile station according to one embodiment of the present invention; and
FIG. 3 shows message flows between entities of the system operating in accordance with one embodiment of a method for requesting/receiving a resource.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

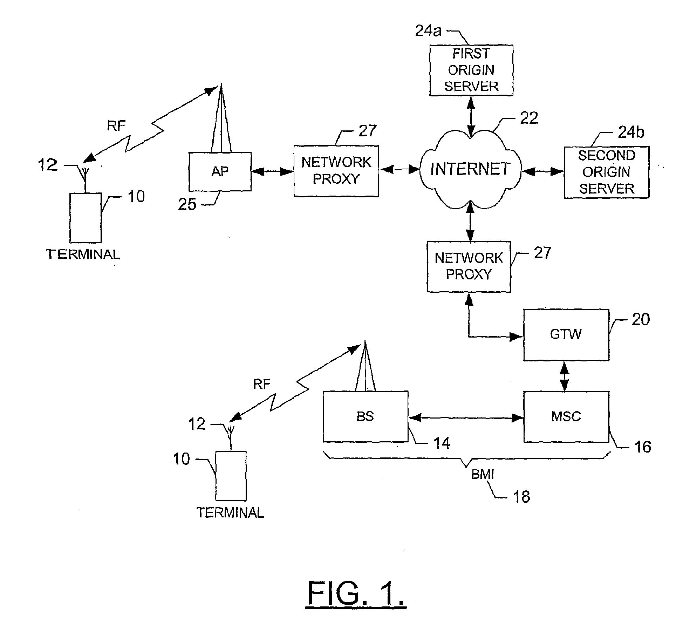

Referring to FIG. 1, an illustration of one type of terminal and system that would benefit from the present invention is provided. The system, terminal and method of the present invention will be primarily described in conjunction with mobile communications applications. It should be understood, however, that the system and method of the present invention can be utilized in conjunction with a variety of other applications, both in the mobile communications industries and outside of the mobile communications industries. For example, the system and method of the present invention can be utilized in conjunction with wireline and/or wireless network communication applications.

More generally, the system and method of the present invention can be utilized with high latency network (i.e., first network) and low latency network (i.e., second network) communication applications. In this regard, the system and method are described herein as being utilized with a high latency wireless cellular network and a low latency wireline data network. It should be understood, however, that the system and method of the present invention can be equally utilized in conjunction with other high latency networks such as wireless satellite networks, and underwater trans-continent networks. It should also be understood that the system and method of the present invention can be equally utilized with other low latency networks.

As shown, a terminal **10** may include an antenna **12** for transmitting signals to and for receiving signals from a b ase site or base station (BS) **14.** The base station is a part of a cellular network that includes elements required to operate the network, such as a mobile switching center (MSC) **16.** As well known to those skilled in the art, the cellular network may also be referred to as a Base StationlMSC/Interworking function (BMI) **18.** In operation, the MSC is capable of routing calls and messages to and from the terminal when the terminal is making and receiving calls. The MSC also provides a connection to landline trunks when the mobile station is involved in a call. Further, the MSC can, but need not, be coupled to a server GTW **20** (Gateway).

The MSC **16** can be coupled to a network, such as a local area network (LAN), a metropolitan area network (MAN), and/or a wide area network (WAN). The MSC can be coupled to the network directly, or if the system includes a GTW **20** (as shown), the MSC can be coupled to the network via the GTW. In one typical embodiment, for example, the MSC is coupled to the GTW, and the GTW is coupled to a WAN, such as the Internet **22.** In turn, devices such as processing elements (e.g., personal computers, server computers or the like) can be coupled to the terminal **10** via the Internet. For example, the processing elements can include one or more processing elements associated with one or more origin servers, two of which are shown as a first origin server **24a** and a second origin server **24b.** Additionally, the network may be coupled to one or more wireless access points (APs) **25,** which may be wirelessly coupled to one or more terminals **10.** By directly or indirectly connecting the terminals and the other devices to the Internet, the terminals can communicate with the other devices, such as according to the Hypertext Transfer Protocol (HTTP), to thereby carry out various functions of the terminal.

Between the Internet **22** and the GTW **20** and/or between the Internet and one or more access points **25,** the system can include one or more network proxies **27,** such as network proxy servers, capable of directing communications to and/or from one or more origin servers **24a, 24b** and terminals **10.** Each network proxy can comprise any of a number of different devices, such as a server processing element, capable of operating in accordance with embodiments of the present invention, as described in more detail below. As shown and described herein, each network proxy is separate from the GTW and the access points. It should be understood, however, that each network proxy can be co-located with or distributed from a GTW and/or an access point, without departing from the spirit and scope of the present invention.

Various of the elements of the system, including the terminal 10 and/or origin servers **24a, 24b,** can comprise any of a number of different processing devices, systems or the like capable of operating in accordance with embodiments of the present invention. For example, the terminal and/or origin servers can generally include a processor connected to a memory, and may include a user interface. In this regard, the memory typically stores instructions for the processor to perform steps associated with operating the respective element in accordance with embodiments of the present invention. In addition, as an origin server, the memory can store resources that may be retrieved, such as by terminals. The memory can store any of a number of different resources, including for example, electronic text, audio, video and/or multimedia files. The memory can store resources in any of a number of different manners, such as at unique memory locations that may be identified by file paths, such as those that may be included within a uniform resource identifier (URI), for example.

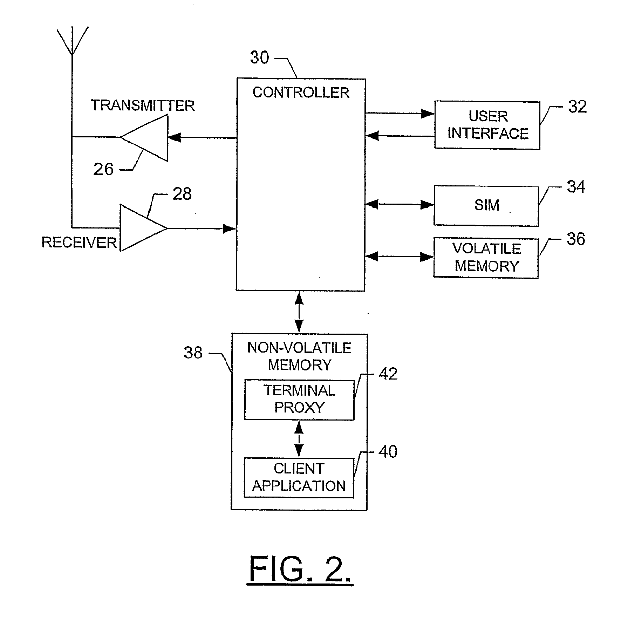

Reference is now drawn to FIG. 2, which illustrates a block diagram of one type of terminal **10,** a mobile station, that would benefit from the present invention. It should be understood, however, that the mobile station illustrated and hereinafter described is merely illustrative of one type of terminal that would benefit from the present invention and, therefore, should not be taken to limit the scope of the present invention. While several embodiments of the mobile station are illustrated and will be hereinafter described for purposes of example, other types of terminals, such as pagers, personal computers, laptop computers, personal digital assistants (PDAs) and other types of voice and text communications systems, can readily employ the present invention. In this regard, the terminal can comprise any of a number of different terminals that include a processing element or controller, and that are capable of communicating over a network such as the Internet **22** either directly or indirectly, including via the wireless access point **25** and/or the BMI **18.**

As shown, mobile station includes a transmitter **26,** a receiver **28,** and a controller **30** that provides signals to and receives signals from the transmitter and receiver, respectively. These signals include signaling information in accordance with the air interface standard of the applicable cellular system, and also user speech and/or user generated data. In this regard, the mobile station can be capable of operating with one or more air interface standards, communication protocols, modulation types, and access types. More particularly, the mobile station can be capable of operating in accordance with any of a number of first generation (1G), second generation (2G), 2.5G and/or third-generation (3G) communication protocols or the like. For example, the mobile station may be capable of operating in accordance with 2G wireless communication protocols IS-136 (TDMA), GSM, and IS-95 (CDMA). Some narrow-band AMPS (NAMPS), as well as TACS, mobile terminals may also benefit from the teaching of this invention, as should dual or higher mode phones (e.g., digital/analog or TDMA/CDMA/analog phones).

It is understood that the controller **30** includes the circuitry required for implementing the audio and logic functions of the mobile station. For example, the controller may be comprised of a digital signal processor device, a microprocessor device, and various analog to digital converters, digital to analog converters, and other support circuits. The control and signal processing functions of the mobile station are allocated between these devices according to their respective capabilities. Further, the controller may include the functionally to operate one or more software programs, which may be stored in memory (described below). For example, the controller may be capable of operating a client application. For example, the controller may be capable of operating a connectivity program, such as a conventional Web browser, which allows the mobile station to transmit and receive Web content, such as according to HTTP. Additionally, the controller may be capable of operating a terminal proxy capable of directing communications to and/or from the client application in accordance with embodiments of the present invention, as described in more detail below.

The mobile station also comprises a user interface **32** that may include a conventional earphone or speaker, a ringer, a microphone, a display, and a user input interface, all of which are coupled to the controller **30.** The user input interface, which allows the mobile station to receive data, can comprise any of a number of devices allowing the mobile station to receive data, such as a keypad, a touch display (not shown) or other input device. In embodiments including a keypad, the keypad includes the conventional numeric (0-9) and related keys (#, *), and other keys used for operating the mobile station.

The mobile station can also include memory, such as a subscriber identity module (SIM) **34,** a removable user identity module (R-UIM) or the like, which typically stores information elements related to a mobile subscriber. In addition to the SIM, the mobile station can include other memory. In this regard, the mobile station can include volatile memory **36,** such as volatile Random Access Memory (RAM) including a cache area for the temporary storage of data. The mobile station can also include other non-volatile memory **38,** which can be embedded and/or may be removable. The memories can store any of a number of pieces of information, data and/or software used by the controller 30 to implement the functions of the mobile station. For example, the SIM can include an identifier, such as an international mobile equipment identification (IMEI) code, capable of uniquely identifying the mobile station, such as to the MSC **16.** Also, for example, the non-volatile memory can store software, such as a client application **40** (e.g., connectivity program) and a terminal proxy **42.**

As shown and described herein the client application **40** and terminal proxy **42** comprise software executed by the controller **30** of a terminal **10.** It should be understood, however, that the functions of the client application and/or the terminal proxy can equally be implemented in hardware, firmware or the like, without departing from the spirit and scope of the present invention. It should also be understood that although the terminal proxy is shown and described as being co-located with the terminal, the terminal proxy can equally be distributed from the terminal. In such instances, the terminal proxy and terminal can be capable of communicating in accordance with a wireline technique independent of the wireless link between the terminal and the AP **25**, and between the terminal and the BMI **18**.

To request a resource at a location on a host, such as an origin server **24a, 24b,** a terminal **10** may send a request message to the respective origin server identifying the resource at the respective location. The location may be identified in any of a number of different manners. In one embodiment, for example, the location may be identified by a uniform resource identifier (URI), in accordance with HTTP. As indicated in the background section, however, in various instances the requested resource may have been temporarily or permanently moved from the one location to another location, either on the same host or on another host. Conventionally, when a resource has moved -from a first location to a second location, the terminal must receive an indication of where the resource has moved, and thereafter resend a request message to identify the current location of the resource. Such a technique of redirecting a resource request, however, undesirably increases latency in the client receiving the resource.

To decrease latency between a client (e.g., the client application **40)** requesting and receiving a resource that has moved from one location to another location, embodiments of the present invention provide the network proxies **27,** and may additionally provide the terminal proxies **42.** More particularly, in instances in which a client may otherwise be required to resend a resource request identifying a subsequent location of a requested resource, a respective network proxy is capable of resending the resource request on behalf of the client, and may also be capable of compressing the requested resource for transmission to the client. In this regard, a respective terminal proxy may be capable of uncompressing the requested resource, which can thereafter be passed to the client. Advantageously, the terminal proxies may also be capable of receiving, and thereafter communicating to the client, an indication that the requested resource moved from one location to another.

As described above, the network proxies **27** are located between the terminals **10** and the Internet **22.** In this regard, the network proxies can be capable of wireline network communication with the Internet, and thus the origin servers **24a, 24b.** Also, the network proxies can be capable of wireless network communication with the terminals. By resending resource requests from the network proxies, then, the number of wireless transmissions required for the terminal to retrieve a resource that has moved from one location to another can be reduced, as compared to conventional techniques for retrieving resources under the same circumstances. Advantageously, the network proxies are capable of operating in a manner transparent to hosts (e.g., origin servers) of requested resources. And by including the terminal proxies, the network proxies are further capable of operating in a manner transparent to clients (e.g., terminals).

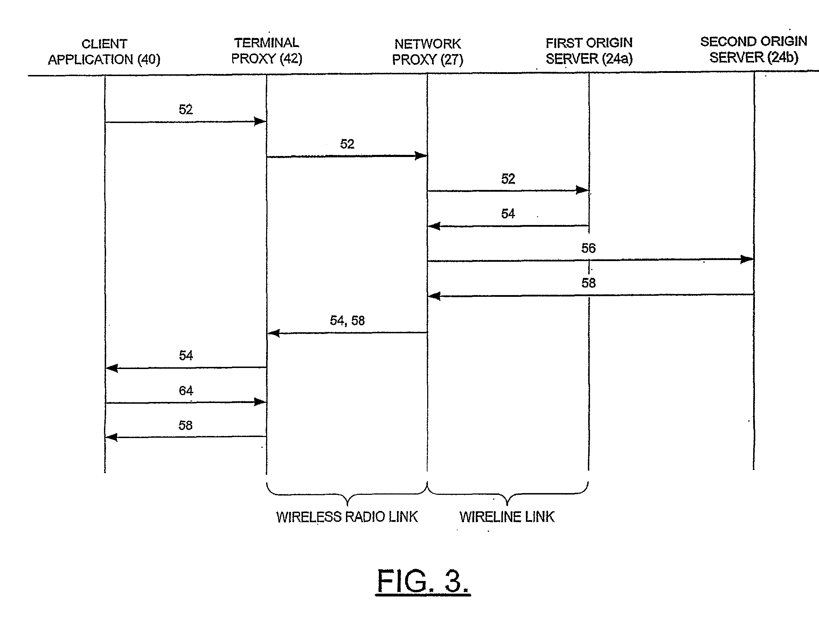

Reference is now drawn to FIG. 3, which illustrates various message flows in a method for retrieving a resource in accordance with one embodiment of the present invention. For purposes of explanation, the method of FIG. 3 is shown and described in the context of the client application **40** of a terminal **10** requesting a resource at a first location on the first origin server **24a,** where the resource was moved to a second location on the second origin server **24b** prior to the request. It should be understood, however, that the second location, as well as the first location, can be located in memory of the first origin server. Also, the client can comprise any of a number of devices capable of requesting resources from hosts, and need not comprise the client application of the terminal. Further, is should be understood that the previous host and current host of the resource can comprise any of a number of different hosts of resources, and need not comprise the first origin server and the second origin server, respectively.

As shown, the method of this embodiment generally begins with the client application **40** of a terminal **10,** sending a request message **52** (i.e., first request) to the first origin server **24a.** The request message can be formatted in accordance with any number of different protocols, but in one advantageous embodiment the request message is formatted in accordance with HTTP, such as HTTP version 1.1. For a more complete description of HTTP version 1.1, see IETF RFC 2616, entitled: *Hypertext Transfer Protocol - HTTP*/*1.1,* the contents of which are hereby incorporated by reference in its entirety. Also, the request message can request the resource from the first location on the first origin server in accordance with any of a number of different techniques, including the HTTP GET technique.

The request message **52** can identify any of a number of different parameters, including the requested resource and the first location on the first origin server **24a.** The requested resource at the first location on the first origin server can be identified in any of a number of different manners, such as by a uniform resource identifier (URI). For example, the requested resource at the first location on the first origin server can be identified by the URI: "www.first_origin_server.com/first_location/resource.html." In the example URI, "/first_location/resource.html" identifies the first location (i.e., "/first_location/") and the resource (i.e., "resource.html"), and "www.first_origin_server.com" identifies the first origin server.

In contrast to conventional techniques for retrieving resources, the request message **52** passes through the terminal proxy **42,** which in turn passes the request message to the network proxy **27.** As shown, in accordance with embodiments of the present invention, the request message may pass from the client application **40** to the terminal proxy local within a terminal **10.** And from the terminal proxy, the request message may pass to the network proxy over a wireless radio link. As shown and described herein, messages sent to and from the client application in relation to retrieving resources pass through the terminal proxy. It should be understood, however, that the system need not include a terminal proxy, and in such instances as well as various other instances, messages sent to and/or from the client application need not pass through a terminal proxy.

Upon receipt of the request message **52,** the network proxy **27** can forward the request message to the first origin server **24a** identified by the message (e.g., the header of an HTTP GET message). Upon receipt of the request message, the first origin server can interpret the request message and thereafter respond in any of a number of different manners, such as by sending a response (i.e., first response). For example, if the first origin server hosts the requested resource at the first location, the first origin server can respond to the request message by sending the requested resource to the client application **40.** In this regard, from the first origin server, the response can pass to the network proxy, which can examine the response from the first origin server to determine whether the response identifies the resource at another location, such as the second location on the second origin server **24b,** and instructs the client application to resend the request message to the host of the other location. And if the response does not identify the resource at another location, the network proxy can pass the response to the client application, such as via the terminal proxy **42.**

If the resource has been moved from the first location on the first origin server **24a,** such as to the second location on the second origin server **24b,** the first origin server may respond with a response message **54** instructing the client application **40** to resend the request message to the second location on the second origin server. For example, the first origin server may respond with an HTTP response message that includes a 3xx "Redirection" status code that indicates that further action must be taken to complete the request, as such is well known to those skilled in the art. More particularly, for example, the response message may include a 300 "Multiple Choices" status code that identifies a number of alternative locations of the resource on one or more hosts, including the second location on the second origin server. Alternatively, for example, the response message may include a 301 "Moved Permanently," 302 "Fouad," 303 "See Other," 305 "Use Proxy" or 307 "Temporary Redirect" status code, all of which identify the second location on the second origin server. As with the first location on the first origin server, the location on the second origin server can be identified in any of a number of different manners, including a URI.

From the first origin server **24a,** the response message **54** can pass to the network proxy **27.** Upon receipt of the response message, the network proxy examines the response message and identifies the 3xx "Redirection" status code. Then, instead of passing the response message to the terminal proxy **42,** such as when the first origin server **24a** hosts the requested resource at the first location, the network proxy resends the resource request to the second origin server **24b** on behalf of the client application **40.** To resend the request, the network proxy can reformulate the request message **52** from the client application into a redirected request message **56** (i.e., second request). Like the request message, the redirected request message identifies the requested resource. But unlike the request message, which identifies the first location on the first origin server, the redirected request message identifies the second location on the second origin server.

From the network proxy **27,** the second origin server **24b** can receive the redirected request message **56,** and thereafter interpret the redirected request message. Upon interpreting the redirected request message, the second origin server can respond in any of a number of different manners, such as by sending a response (i.e., second response). For example, like the first origin server, the second origin server can respond with a response message that includes a 3xx "Redirection" status code. In such instances, the network proxy can examine the response from the second origin server, such as in the same manner as examining the previous response from the first origin server. The network proxy can again reformulate the request message to identify a location on a host identified in the response message from the second origin server. The process can then repeat until the resource is found at a location on a host.

Presuming that the response message does not instruct the client application **40** to resend the request to the host of another location of the resource, such as when the requested resource is found at the second location on the second origin server **24b,** the second origin server can respond with a response message **58,** such as an HTTP response, that may include the requested resource. Response message **58** from the second origin server is sent to the network proxy **27** which, as before, examines the response message, such as for a 3xx "Redirection" status code. After determining that the request message need not be resent to one or more other locations on one or more other hosts, the network proxy can forward response message **58** to the terminal proxy **42.** To allow the network proxy to operate in a manner transparent to the client application **40,** the network proxy can also forward response message **54** from the first origin server **24a** to the terminal proxy. The response messages can be sent to the terminal proxy in any of a number of different manners, such as in the same manner the network proxy received the messages. Alternatively, the network proxy can b e capable of compressing one or both of the response messages into one or more compressed messages, which can be forwarded to the terminal proxy.

Upon receipt of response message **58,** the terminal proxy **42** can forward response message **58** (message from the second origin server **24b**) to the client application **40.** The terminal proxy can forward response message 58 directly to the client application in response to receiving response message **58.** Alternatively, in response to receiving response messages **58** and **54** (message from the first origin server **24a),** the terminal proxy can operate in a manner similar to the first origin server and send response message **54** to the client application. Upon receipt of response message **54,** the client application can resend the resource request, such as by reformulating the request message **52** into a redirected request message **64** (i.e., third request), which may appear similar to redirected request message **56** from the network proxy. Like redirected request message **56** from the network proxy, redirected request message **64** identifies the requested resource, as well as the second location on the second origin server. By sending response message **54** and instructing the client application to resend the resource request, the client application can be made aware of movement of the resource. In this regard, for example, the client application may be capable of formulating subsequent resource requests for the respective resource to the second location on the second origin server, as opposed to repeating the request to the first origin server.

From the client application **40,** the terminal proxy **42** receives redirected request message **64.** Instead of passing redirected request message **64** to the second origin server **24b,** the terminal proxy can pass response message **58** (message including the requested resource) to the client application in response to redirected request message **64.** By passing response message **58** to the client application, the terminal proxy completes the request for the resource from the client application. Although not previously indicated, it should be understood that in instances in which the network proxy **27** compresses response message **54** and/or response message **58,** the terminal proxy typically uncompresses the respective messages before passing the respective messages to the client application. In this regard, the terminal proxy can uncompress the compressed messages at any time before passing the respective messages to the client application, such as upon receipt of the compressed messages from the network proxy.

As can be seen, the method shown in FIG. 3 and described herein includes more transmissions between elements than a conventional technique for retrieving a resource that includes redirecting the request. More particularly, in accordance with one conventional technique, a message may be retrieved over four transmissions (i.e., request message, redirect response, redirected request and response including the resource). In comparison, in accordance with the method of one embodiment of the present invention as shown in FIG. 3, a resource may be retrieved over ten transmissions. It should be understood, however, that although the method of embodiments of the present invention includes more transmissions, the method can require less time to retrieve a resource as compared to conventional techniques, particularly when the client application communicates with the host of the resource, directly or indirectly, in accordance with a wireless communication technique. In this regard, all four of the transmissions in the conventional technique for retrieving a resource pass over a wireless link between the terminal **10** and the host(s) of the resource (e.g., origin servers **24a, 24b).** In contrast to the conventional technique for requesting resources, as shown in FIG. 3, in accordance with embodiments of the present invention, a resource may be retrieved with only two transmissions passing over a wireless link. And as transmissions over a wireless link may require significantly more time than the same transmissions over a wireline link, conventional techniques introduce more latency between resource request and reception than the method of embodiments of the present invention.

According to various embodiments of the present invention, the system, terminal **10,** first origin server **24a,** second origin server **24b** and/or network proxy **27** of embodiments of the present invention generally operate under control of a computer program product (e.g., client application **40,** terminal proxy **42,** etc.). The computer program product for performing the methods of embodiments of the present invention includes a computer-readable storage medium, such as the non-volatile storage medium, and computer-readable program code portions, such as a series of computer instructions, embodied in the computer-readable storage medium.

In this regard, FIG. 3 is a control flow diagram of a method, system and program product according to the invention. It will be understood that each block or step of the flow diagram, and combinations of blocks or steps in the flow diagram, can be implemented by computer program instructions. These computer program instructions may be loaded onto a computer or other programmable apparatus, such as the terminal **10,** to produce a machine, such that the instructions which execute on the computer or other programmable apparatus create means for implementing the functions specified in the flow diagram block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flow diagram block(s) or step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the flow diagram block(s) or step(s).

Accordingly, blocks or steps of the flow diagram support combinations of means for performing the specified functions, combinations of steps for performing the specified functions and program instruction means for performing the specified functions. It will also be understood that each block or step of the flow diagram, and combinations of blocks or steps in the flow diagram, can be implemented by special purpose hardware-based computer systems which perform the specified functions or steps, or combinations of special purpose hardware and computer instructions.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus comprising:
a processor configured to communicate with a first host over a second network and independent of a first network, the first host being configured to receive a request from a terminal over the first and second networks, the request identifying a resource at a first location,
wherein the processor is configured to receive a response to the request from the first host, reformulate the request to identify the resource at a second location, and thereafter send the reformulated request to a second host, the processor being configured to receive a response to the reformulated request from the second host; **characterized by**:
wherein the processor is configured to send the responses from the first and second hosts to the terminal.

2. An apparatus according to claim 1, wherein the response from the first host identifies the resource at the second location.

3. An apparatus according to claim 2, wherein the request comprises a hypertext transfer protocol (HTTP) request, and wherein the response from the first host comprises a HTTP response including a 3xx "Redirection" status code.

4. An apparatus according to claim 1, wherein the processor is configured to determine if the response from the first host identifies the resource at the second location, and send the response from the first host to the terminal if the response from the first host does not identify the resource at the second location, or reformulate the request, and send the reformulated request to the second host, if the response from the first host does identify the resource at the second location.

5. An apparatus according to claim 4, wherein the request comprises a hypertext transfer protocol (HTTP) request, wherein the response from the first host comprises a HTTP response, and wherein the processor is configured to determine if the HTTP response includes a 3xx "Redirection" status code to thereby determine if the response from the first host identifies the resource at the second location.

6. An apparatus according to any one of claims 1 to 5, wherein the processor is configured to compress at least one of the responses from the first and second hosts before sending the responses to the terminal.

7. An apparatus comprising:
a processor configured to operate a client application to send a request for a resource to a first host over a first network and a second network, the request identifying the resource at a first location, the request being sent to thereby enable a network proxy to receive a response to the request from the first host over the second network and independent of the first network, reformulate the request to identify the resource at a second location, and send the reformulated request to a second host to thereby enable the second host to respond to the reformulated request with a response; and **characterized by**:
wherein the processor is also configured to operate an apparatus proxy to receive the responses from the first and second hosts, the responses being received via the network proxy.

8. An apparatus according to Claim 7, wherein the apparatus proxy is configured to send the response from the first host to the client application to thereby enable the client application to reformulate the request to identify the resource at the second location, and wherein the apparatus proxy is configured to receive the respective, reformulated request from the client application, and in response thereto, send the response from the second host to the client application.

9. An apparatus according to any one of claims 7 to 8, wherein at least one of the response from the first and second hosts is compressed, and wherein the apparatus proxy is configured to uncompress the compressed at least one of the responses before sending the respective response to the client application.

10. A method comprising:
receiving a response from a first host over a second network and independent of a first network, wherein the first response is responsive to a request sent from an apparatus to the first host over the first and second networks, wherein the request identifies a resource at a first location;
reformulating the request to identify the resource at a second location;
sending the reformulated request to a second host;
receiving a response to the reformulated request from the second host; and
**characterized by**:
sending the responses form the first and second hosts to the apparatus.

11. A method according to claim 10, wherein the response from the first host identifies the resource at the second location.

12. A method according to claim 11, wherein the request comprises a hypertext transfer protocol (HTTP) request, and wherein the response from the first host comprises a HTTP response including a 3xx "Redirection" status code.

13. A method according to claim 10 further comprising:
determining if the response from the first host identifies the resource at the second location; and
sending the response from the first host to the apparatus if the respective response does not identify the resource at the second location, or
reformulating the request, and sending the reformulated request, if the respective response does identify the resource at the second location.

14. A method according to claim 13, wherein the request comprises a hypertext transfer protocol (HTTP) request, wherein the response from the first host comprises a HTTP response, and wherein determining if the response from the first host identifies the resource at the second location comprises determining if the HTP response includes a 3xx "Redirection" status code.

15. A method according to any one of claims 10 to 14 further comprising:
compressing at least one of the responses from the first and second hosts before sending the responses to the apparatus.

16. A method comprising:
sending, from a client application of an apparatus, a request for a resource to a first host over a first network and a second network, the request identifying the resource at a first location, the request being sent to thereby enable a network proxy to receive a response to the request from the first host over the second network and independent of the first network, reformulate the request to identify the resource at a second location, and send the reformulated request to a second host to thereby enable the second host to respond to the reformulated request with a response; and **characterized by**:
receiving, at an apparatus proxy of the apparatus, the responses from the first and second hosts, the responses being received via the network proxy.

17. A method according to Claim 16 further comprising:
sending, via the apparatus proxy, the response from the first host to the client application to thereby enable the client application to reformulate the request to identify the resource at the second location;
receiving, at the apparatus proxy, the respective, reformulated request; and in response thereto,
sending, via the apparatus proxy, the response from the second host to the client application.

18. A method according to claim 16, wherein receiving the responses comprises receiving the responses at least one of which is compressed, the method further comprising:
uncompressing the compressed at least one of the responses at the apparatus proxy before sending the respective response to the client application.

19. A computer program which, when executed, causes the method of any one of claims 10 to 15 to be performed.

20. A computer program which, when executed, causes the method of any one of claims 16 to 18 to be performed.
